(19) Europäisches Patentamt
European Patent Office
Office européen des brevets

(11) **EP 3 840 268 A1**

(12) **EUROPEAN PATENT APPLICATION**

(43) Date of publication:
**23.06.2021 Bulletin 2021/25**

(51) Int Cl.:
**H04L 1/18** (2006.01)  **H04L 1/08** (2006.01)
**H04L 1/20** (2006.01)

(21) Application number: **21156340.8**

(22) Date of filing: **27.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2017 US 201762476933 P**

(62) Document number(s) of the earlier application(s) in accordance with Art. 76 EPC:
**18776784.3 / 3 580 879**

(71) Applicant: **MediaTek Singapore Pte. Ltd.**
**Singapore 138628 (SG)**

(72) Inventors:
• **MEDLES, Abdelkader**
  **Cambridge,, CB23 6DW (GB)**
• **CHARBIT, Gilles**
  **Cambridge,, CB23 6DW (GB)**

• **VALADON, Cyril**
  **Cambridge,, CB23 6DW (GB)**
• **CHEN, Tao**
  **Beijing, (CN)**
• **YANG, Weidong**
  **San Jose,, CA California 95134 (US)**
• **CUPILLARD, Arnaud**
  **Cambridge,, CB23 6DW (GB)**

(74) Representative: **Hoefer & Partner Patentanwälte mbB**
**Pilgersheimer Straße 20**
**81543 München (DE)**

Remarks:
This application was filed on 10.02.2021 as a divisional application to the application mentioned under INID code 62.

(54) **HARQ AND ARQ DESIGN FOR URLLC IN MOBILE COMMUNICATIONS**

(57) Techniques, schemes, designs, systems and methods pertaining to HARQ and ARQ design for URLLC in mobile communications are described. A processor of a first apparatus of a mobile network performs a first transmission to a second apparatus of the mobile network in support of ultra-reliablelow-latency communications (URLLC) with a first amount of redundancy. The processor determines whether a predefined condition is met. Responsive to a determination that the predefined condition is met, the processor performs a second transmission to the second apparatus in support of the URLLC with a second amount of redundancy greater than the first amount of redundancy. The processor also multiplexes URLLC traffic and enhanced Mobile Broadband (eMBB) traffic in transmissions to the second apparatus.

1300

ESTABLISH, BY A PROCESSOR OF A FIRST APPARATUS OF A MOBILE NETWORK, A COMMUNICATION LINK WITH A SECOND APPARATUS OF THE MOBILE NETWORK
1310

PROVIDE, BY THE PROCESSOR, ULTRA-RELIABLE LOW-LATENCY COMMUNICATIONS (URLLC) TRAFFIC IN TRANSMISSIONS TO THE SECOND APPARATUS
1320

• PERFORM HARQ FIRST TRANSMISSIONS IN A FIRST BANDWIDTH PART IN A FREQUENCY DOMAIN
• PERFORM HARQ RETRANSMISSIONS IN AT LEAST A SECOND BANDWIDTH PART IN THE FREQUENCY DOMAIN

**FIG. 13**

EP 3 840 268 A1

**Description**

CROSS REFERENCE TO RELATED APPLICATIONS

The present disclosure claims the priority benefit of U.S. Provisional Patent Application No. 62/476,933, filed on 27 March 2017. Content of the aforementioned application is incorporated by reference in its entirety.

FIELD OF INVENTION

The present disclosure is generally related to mobile communications and, more particularly, to hybrid automatic repeat request (HARQ) and automatic repeat request (ARQ) design for ultra-reliable low-latency communications (URLLC) in mobile communications.

BACKGROUND OF THE INVENTION

Unless otherwise indicated herein, approaches described in this section are not prior art to the claims listed below and are not admitted as prior art by inclusion in this section.

In the 3rd Generation Partnership Project (3GPP) Radio Access Network layer 1 (RANI) specifications, it is indicated that the 5th Generation (5G) New Radio (NR) mobile communications should be able to support URLLC type services with very aggressive high reliability and low latency requirements. There are some challenges to achieve such requirement. For example, high reliability requires very low block error rate (BLER). Moreover, low latency reduces the number of possible retransmissions. Current HARQ framework design based on BLER target of 10% error rate and relaxed latency require adaptation to support URLLC.

To achieve the above-stated requirement, there are some design considerations. Firstly, URLLC with very low latency allows for a very low number of retransmissions, maximum 1 or 2. Secondly, the BLER target is to be very low (e.g., $< 10^{-5}$) for URLLC. Thirdly, enhanced Mobile Broadband (eMBB) and URLLC traffic should be multiplexed to improve system efficiency. In view of the design considerations, there are some issues to be overcome. For instance, very low BLER and short retransmission lead to low efficiency. This requires a new design of HARQ and BLER target to improve efficiency. Additionally, there is a need to balance between (1) support of eMBB/URLLC multiplexing using preemption that leads to impact on eMBB performance and user experience and (2) support of eMBB/URLLC multiplexing without preemption using very short transmission time interval (TTI), or high subcarrier spacing numerology, which leads to high reference signal/control overhead.

SUMMARY OF THE INVENTION

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

The present disclosure proposes mechanisms, schemes, designs and concepts that support better HARQ design for URLLC. Under a proposed scheme, asymmetric HARQ/ARQ design with different BLER targets between initial transmission and retransmission is supported. Moreover, different BLER targets for link adaptation at the same time for initial transmission and retransmission is supported. Furthermore, an aperiodic link adaption report as part of non-acknowledgement (NACK) feedback is introduced. The present disclosure proposes mechanisms, schemes, designs and concepts that improve efficiency of eMBB/URLLC multiplexing. Specifically, retransmission for the same HARQ process across subbands (bandwidth parts) with different numerologies is supported.

In one aspect, a method may involve a processor of a first apparatus of a mobile network performing a first transmission to a second apparatus of the mobile network in support of URLLC with a first amount of redundancy. The method may also involve the processor determining whether a predefined condition is met. The method may further involve the processor, responsive to a determination that the predefined condition is met, performing a second transmission to the second apparatus in support of the URLLC with a second amount of redundancy greater than the first amount of redundancy.

In one aspect, a method may involve a processor of a second apparatus of a mobile network receiving a first transmission from a first apparatus of the mobile network in support of URLLC with a first amount of redundancy. The method may also involve the processor receiving a second transmission from the first apparatus in support of the URLLC with a second amount of redundancy greater than the first amount of redundancy.

In one aspect, a method may involve a processor of a first apparatus of a mobile network establishing a communication link with a second apparatus of the mobile network. The method may also involve the processor multiplexing URLLC traffic and eMBB traffic in transmissions to the second apparatus.

It is noteworthy that, although description provided herein may be in the context of certain radio access technologies, networks and network topologies such as Long-Term Evolution (LTE), LTE-Advanced, LTE-Advanced Pro, 5thGeneration (5G), New Radio (NR) and Internet-of-Things (IoT), the proposed concepts, schemes and any variation(s)/derivative(s) thereof may be implemented in, for and by other types of radio access technologies, networks and network topologies. Thus, the scope of the present disclosure is not limited to the examples described herein.

BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.

FIG. 1 is a diagram of an example scenario showing one-step HARQ and two-step HARQ in accordance with an implementation of the present disclosure.
FIG. 2 is a diagram of an example scenario showing a comparison between legacy HARQ and asymmetric HARQ in accordance with an implementation of the present disclosure.
FIG. 3 is a diagram of an example scenario showing one-step ARQ and two-step ARQ in accordance with an implementation of the present disclosure.
FIG. 4 is a diagram of an example scenario showing a comparison between asymmetric HARQ and asymmetric ARQ in accordance with an implementation of the present disclosure.
FIG. 5 is a diagram of charts showing data resource saving under the theoretical model in accordance with an implementation of the present disclosure.
FIG. 6 is a diagram of a chart showing first transmission BLER target for two-step asymmetric HARQ/ARQ under the theoretical model in accordance with an implementation of the present disclosure.
FIG. 7 is a diagram of charts for verification of the theoretical model in accordance with an implementation of the present disclosure.
FIG. 8 is a diagram of charts for verification of the theoretical model in accordance with an implementation of the present disclosure.
FIG. 9 is a diagram of an example scenario of URLLC retransmission on eMBB/URLLC multiplexing in accordance with an implementation of the present disclosure.
FIG. 10 is a diagram of an example system in accordance with an implementation of the present disclosure.
FIG. 11 is a flowchart of an example process in accordance with an implementation of the present disclosure.
FIG. 12 is a flowchart of an example process in accordance with an implementation of the present disclosure.
FIG. 13 is a flowchart of an example process in accordance with an implementation of the present disclosure.
FIG. 14 is a flowchart of an example process in accordance with an implementation of the present disclosure.

DETAILED DESCRIPTION

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

*Overview*

The URLLC requirement in NR for downlink (DL) and uplink (UL) is to achieve 99.999% reliability with user plane latency of 0.5ms for packets of 32 bytes. Low latency, however, limits the number of HARQ retransmissions. Moreover, reliability leads to low efficiency if URLLC requirement is to be achieved within a single HARQ transmission.
In view of the above, the present disclosure proposes a two-step HARQ scheme that uses asymmetric HARQ retransmission for URLLC instead of using incremental redundancy as in legacy HARQ. Under the proposed scheme, the amount of redundancy per retransmission increases with the retransmission. It is believed that the best use of resources may be achieved under the proposed scheme. In the two-step HARQ scheme, the first or initial transmission may guarantee better efficiency while the second transmission or retransmission may achieve reliability within the required latency.

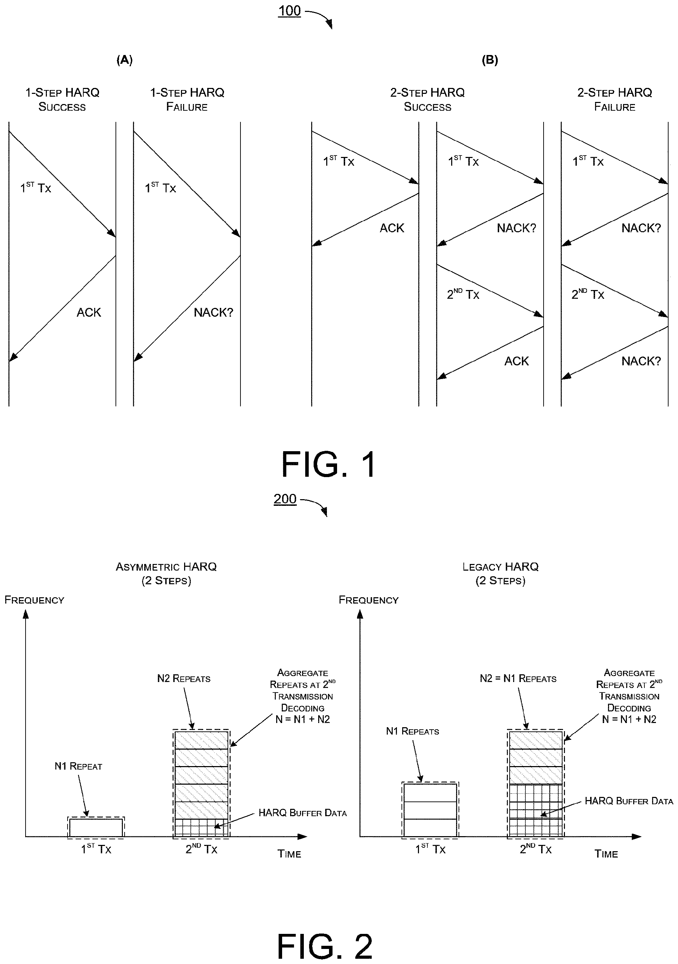

FIG. 1 illustrates an example scenario 100 showing one-step HARQ and two-step HARQ in accordance with an implementation of the present disclosure. Part (A) of FIG. 1 shows an example case of one-step HARQ success as well as an example case of one-step HARQ failure. Part (B) of FIG. 1 shows two example cases of two-step HARQ success as well as an example case of two-step HARQ failure. Compared to one-step HARQ, two-step HARQ may be used to improve system performance.

In case of control channel decoding failure, there would be no NACK transmission. On the other hand, while required for HARQ, NACK transmission is not required for ARQ. For evaluation of the proposed scheme, acknowledgement (ACK), NACK, control errors and resource usage are not considered, while DL data is evaluated.

FIG. 2 illustrates an example scenario 200 showing a comparison between legacy HARQ and asymmetric HARQ in accordance with an implementation of the present disclosure. It is noteworthy that scenario 200 shows repetitions for illustrative purposes; however, the concept may be generalized to any form of redundancy including Chase combining. In FIG. 2, N1 denotes the number of repetitions, which is a measure of redundancy, in an initial transmission (labeled as "1st Tx" in FIG. 2), N2 denotes to the number of repetitions in a retransmission (labeled as "2nd Tx" in FIG. 2), and N denotes the total accumulated repetitions used for the retransmission decoding.

Under the proposed asymmetric HARQ scheme, the amount of redundancy added at each transmission may increase with the retransmission index. For instance, assuming there are three transmissions total, including an initial transmission and two retransmissions, the redundancy may be in the form of repetitions, expressed as $N1 \leq N2 \leq N3$. Here, N1 denotes the number of repetitions in a first (initial) transmission, N2 denotes the number of repetitions in a second transmission (first retransmission), and N3 denotes the number of repetitions in a third transmission (second retransmission). In contrast, in legacy HARQ, the redundancy can be expressed as $N1 \approx N2 \approx N3$. That is, legacy HARQ relies on a large number of retransmissions to achieve low BLER.

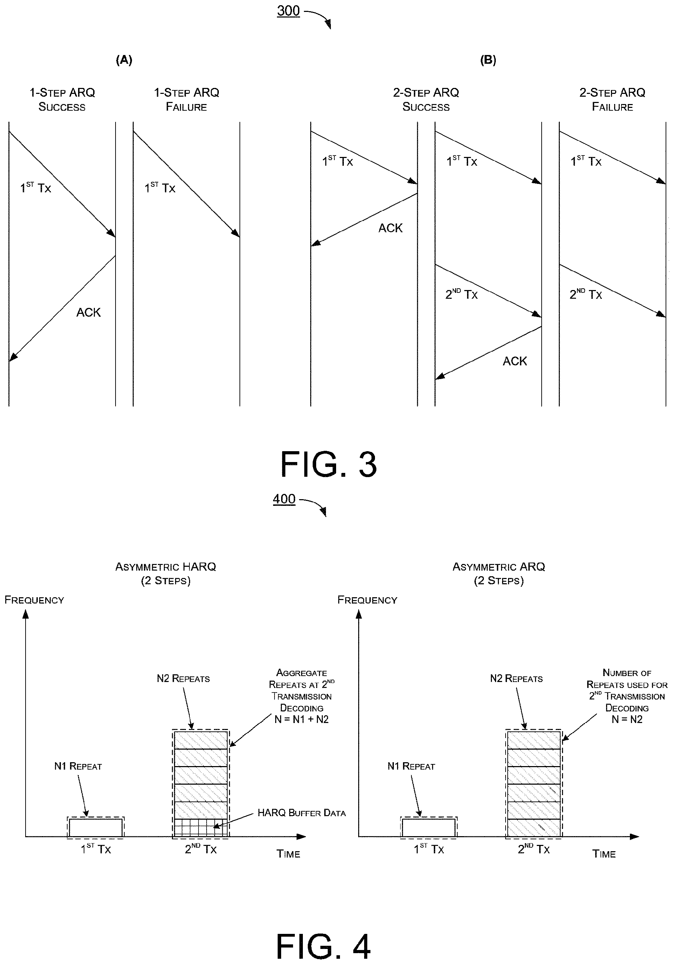

FIG. 3 illustrates an example scenario 300 showing one-step ARQ and two-step ARQ in accordance with an implementation of the present disclosure. Part (A) of FIG. 3 shows an example case of one-step ARQ success as well as an example case of one-step ARQ failure. Part (B) of FIG. 3 shows two example cases of two-step ARQ success as well as an example case of two-step ARQ failure. Compared to HARQ, ARQ does not require NACK as the transmitter can detect failure when no ACK is received. The receiver does not need to maintain HARQ buffer, and thus each transmission is considered a transmission of new data. This allows for simpler control with shorter downlink control information (DCI) message as no HARQ parameter is required. Furthermore, ARQ retransmission may potentially be implemented across carrier components (CC), while it may be difficult to implement HARQ retransmission across CC.

FIG. 4 illustrates an example scenario 400 showing a comparison between asymmetric HARQ and asymmetric ARQ in accordance with an implementation of the present disclosure. As with FIG. 2, in FIG. 4, N1 denotes the number of repetitions, which is a measure of redundancy, in an initial transmission (labeled as "1st Tx" in FIG. 4), N2 denotes to the number of repetitions in a retransmission (labeled as "2nd Tx" in FIG. 4), and N denotes the total accumulated repetitions used for the retransmission decoding.

Under the proposed asymmetric ARQ scheme, an asymmetric ARQ procedure may perform full retransmission with increased redundancy. There is no soft buffer used for combining retransmissions. There may be some loss in performance for lack of combining; however, the asymmetric ARQ scheme allows for simpler operation and less reliance on control and NACK channels.

The following description pertains to a theoretical model utilized in developing the proposed schemes.

In the theoretical model, reliability of a communication link is most affected by fading. For asymptotic low BLER region, the BLER may be approximated as $P_e \approx c_0 \, SNR^{-div}$. Here, div is the diversity experienced by the channel (including coding). The diversity may be considered as a product of a number of transmitting antenna ports, a number of receiving antenna ports and a number of frequency bands. The diversity may be expressed mathematically as $div = \#Tx \cdot \#Rx \cdot \#Freq\_diversity$. In the theoretical model, N denotes the number of repeats (redundancy) required to meet the reliability (target BLER). Also, in the theoretical model, the average number of resources required for one-step HARQ, S1, may be expressed mathematically as $S1 = N$. The average number of resources required for two-step HARQ, S2, may be expressed mathematically as $S2 = N1 + P_e^{1st\,Tx} \times N2 = N1 + (N - N1) \times P_e^{1stTx}$.

Considering asymptotic behavior of the BLER in high signal-to-noise ratio (SNR), $P_e^{1stTx} \approx c_0 \, (N/N1 \times SRN)^{-div} \times (N1/N)^{-div} \approx (N/N1)^{div} \times P_e^{2nd\,Tx}$. In two-step HARQ, an error only happens if both the first transmission and the second transmission decoding fail, expressed mathematically below.

$$\text{BLER}^{\text{target}} = \text{Prob}(1^{\text{st}} \text{ decode fails, } 2^{\text{nd}} \text{ decode fails})$$

$$= \text{Prob}(1^{\text{st}} \text{ decode fails / } 2^{\text{nd}} \text{ decode fails}) \times \text{Prob}(2^{\text{nd}} \text{ decode fails})$$

$$\lll \text{Prob}(2^{\text{nd}} \text{ decode fails})$$

The above expression stands since Prob(1st decode fails / 2nd decode fails) $\lesssim$ 1. For N >= 2*N1, BLER$^{\text{target}}$ $\approx$ Prob(2nd decode fails).

For two-step HARQ, normalized average use of DL data resource with respect to one-step HARQ may be expressed mathematically below.

$$\text{S2/S1} \approx \text{N1/N} + (1\text{-N1/N}) \times (\text{N/N1})^{\text{div}} \times \text{BLER}^{\text{target}}$$

For two-step ARQ, normalized average use of DL data resource with respect to one-step ARQ may be expressed mathematically below.

$$\text{S2/S1} \approx \text{N1/N} + (\text{N/N1})^{\text{div}} \times \text{BLER}^{\text{target}}$$

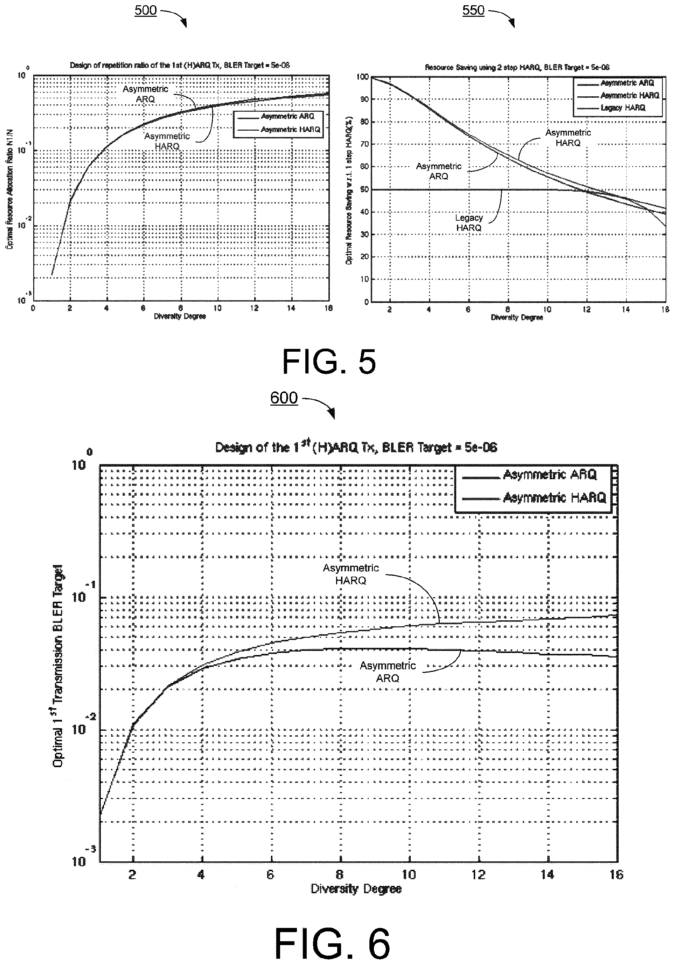

FIG. 5 illustrates charts 500 and 550 showing data resource saving under the theoretical model in accordance with an implementation of the present disclosure. Specifically, chart 550 shows data resource saving using asymmetric two-step HARQ/ARQ. It can be seen that there is similar saving for HARQ and ARQ with approximately 85% saving at diversity degree of 4. There is also similar optimal resource allocation for HARQ and ARQ: N1/N ~ 1/10 at diversity degree of 4. It can also be seen that legacy two-step HARQ only gives about 50% saving. Legacy HARQ corresponds to constant N1/N = ½ independently of diversity degree.

FIG. 6 illustrates a chart 600 showing first transmission BLER target for two-step asymmetric HARQ/ARQ under the theoretical model in accordance with an implementation of the present disclosure. As shown in chart 600, optimal first transmission BLER target for HARQ is higher than that for ARQ. For HARQ, the optimal first transmission BLER target increases with the diversity degree. For example, the optimal first transmission BLER target for HARQ increases from approximately 1% at diversity degree of 2 to approximately 7% at diversity degree of 16. For ARQ, the optimal first transmission BLER target is more stable. For example, the optimal first transmission BLER target for ARQ remains approximately 4% for diversity degree in the region from 4 to 16.

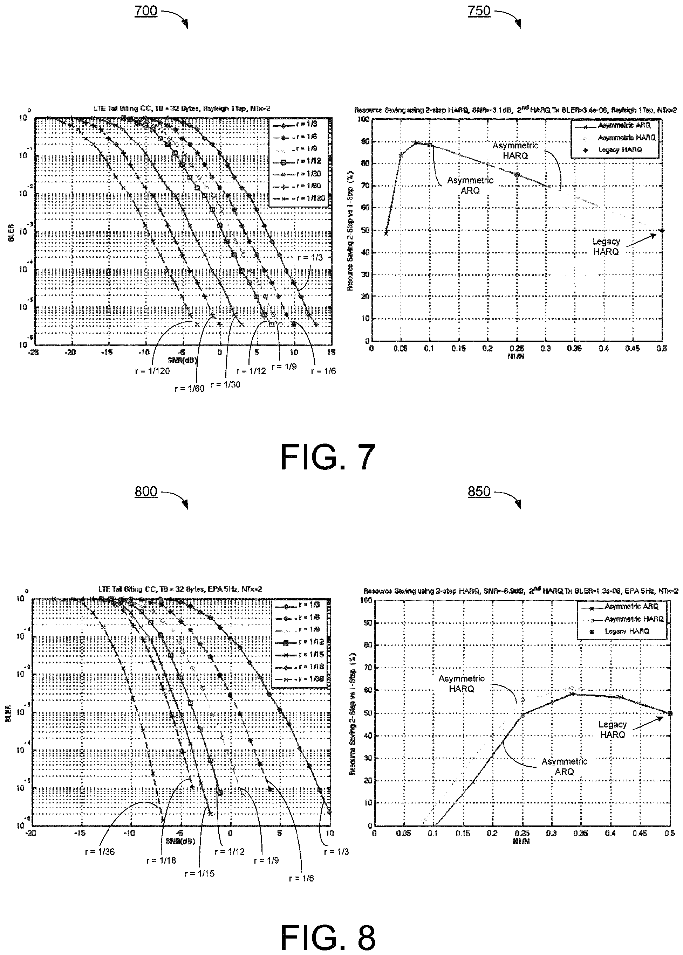

FIG. 7 illustrates charts 700 and 750 for verification of the theoretical model in accordance with an implementation of the present disclosure. Referring to charts 700 and 750, for single tap fading channel ($N_{Tx}$ = 2, $N_{Rx}$ = 2), there is no frequency diversity. The measured diversity degree from asymptotic curve is approximately 3.7. For SNR = -3.1, r = 1/120 achieves $3.4e^{-6}$ BLER. Best N1/N in interval [0.075 to 0.1] (close to theoretical analysis ~ 0.09) corresponds to first transmission rate r = 1/9 to r = 1/12. Resource saving is approximately 89% (close to theoretical analysis ~ 88%), and asymmetric HARQ/ARQ uses one fifth of the resources consumed by legacy HARQ. Target first transmission BLER is in interval 1.5% to 3% (close to theoretical analysis ~ 2.5%).

FIG. 8 illustrates charts 800 and 850 for verification of the theoretical model in accordance with an implementation of the present disclosure. Referring to charts 800 and 850, for Extended Pedestrian A model (EPA) multipath channel ($N_{Tx}$ = 2, $N_{Rx}$ = 2), frequency diversity changes with bandwidth allocation. The measured diversity degree from asymptotic curve (r = 1/18) is approximately 9. For SNR = -6.9, r = 1/36 achieves $1.3e^{-6}$ BLER. Best N1/N of approximately 0.33 (close to theoretical analysis ~ 0.3) corresponds to first transmission rate r = 1/12. Resource saving is approximately 61% for HARQ, matching theoretical analysis of approximately 61%. Target first transmission BLER is approximately 10% (theoretical analysis ~ 6% for HARQ, ~ 4% for ARQ), with the difference likely due to quantization of the coding rate.

Thus, asymmetric HARQ/ARQ can reduce URLLC required resources. Asymmetric HARQ/ARQ may be applicable with two or more steps. Asymmetric HARQ/ARQ may be also applicable to UL transmissions, including grant-based and grant-free transmissions. The gain is better for low-diversity channels (less reliable channels). For diversity degree of about 4, asymmetric HARQ/ARQ uses one fifth of resources needed for legacy ARQ.

For URLLC, the control channel represents a large overhead. For instance, HARQ requires NACK to be transmitted. A user needs to be able to decode the DL control channel with high reliability to know that a transmission has occurred. For HARQ to operate correctly, the DL control channel needs the same reliability as the one-step HARQ data transmission (> 99.999%). As for the use of ARQ, the DL control channel and DL data may have the same reliability. This also enables low control overhead approaches such as DCI-light/free. For ARQ, the proposed asymmetric scheme may be applied to both DL control channel and DL data, thereby resulting in improved resource saving.

Under the proposed schemes in accordance with the present disclosure, asymmetric HARQ/ARQ may be implemented in several ways. A receiver may provide a long-term measurement of the diversity degree or its equivalent to a transmitter which may utilize such information to adapt HARQ/ARQ. The receiver may also provide feedback to the transmitter about the required amount of redundancy (or repetitions) in transmission and retransmission. The feedback may be in the form of link adaptation reports, or channel quality indicators (CQIs), calculated based on the first BLER target for the first transmission set to a value around 1% to 10% and the second BLER target for the second transmission (retransmission) which is set to be lower than the first BLER target. In case of asymmetric HARQ, the receiver may indicate the amount of redundancy required for retransmission together with the NACK of the first transmission. The transmitter may use measurement on the reverse link to infer the diversity degree or equivalent. The transmitter may also run separate open loops on the first transmission and retransmission with different BLER targets. For instance, the BLER target for the first transmission may be set to around 1% to 10%. Additionally, the BLER target for the retransmission may be set to a lower value.

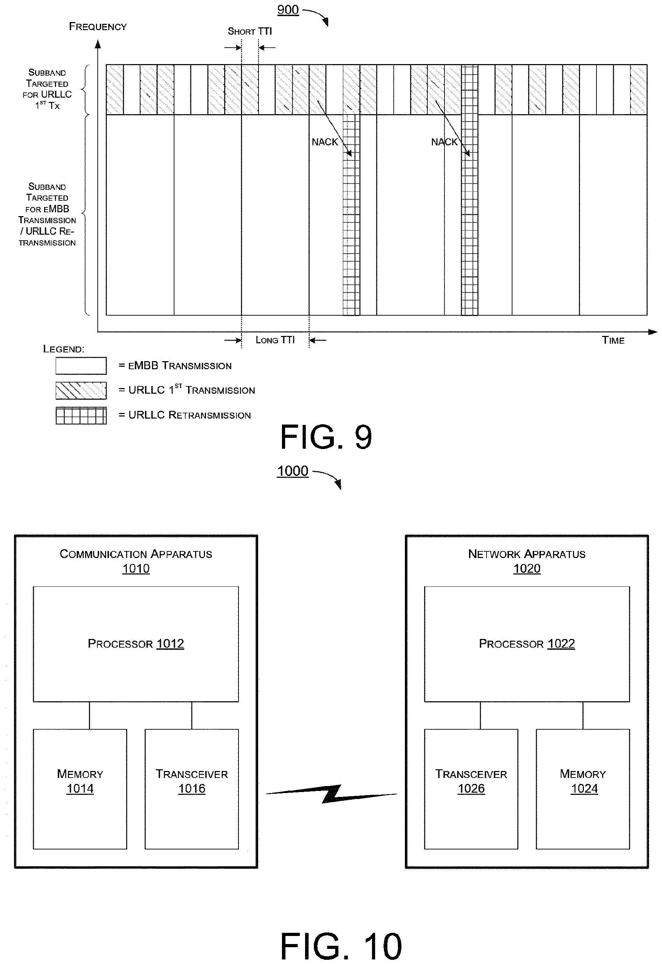

FIG. 9 illustrates an example scenario 900 of URLLC retransmission on eMBB/URLLC DL multiplexing in accordance with an implementation of the present disclosure. Referring to FIG. 9, under a URLLC retransmission scheme in accordance with the present disclosure, one subband may be targeted for URLLC first transmission and eMBB transmission. Another subband may be targeted for eMBB transmission and URLLC retransmission. For instance, as shown in scenario 900, a first subband is primarily targeted for URLLC first transmission and a second subband is primarily targeted for eMBB transmission. The first subband has a first numerology with large subcarrier spacing (SCS) corresponding to short slots and/or TTIs while the second subband has a second numerology with small subcarrier spacing corresponding to long slots and/or TTIs. At times, the first subband may also be used for eMBB transmission and URLLC retransmission. Similarly, at times, the second subband may also be used for URLLC retransmission. For example, when a NACK is received in response to a URLLC first transmission in the first subband, a URLLC retransmission may occur thereafter in the second subband (and optionally in the first subband), as shown in scenario 900.

Thus, the impact of URLLC preemption on eMBB may be minimized or otherwise reduced in a number of ways. For instance, two subbands with different numerologies and/or slots or TTI lengths may be multiplexed in the frequency domain. Additionally, large SCS subband may carry URLLC first transmission and potentially eMBB short transmissions. Moreover, small SCS subband may carry eMBB transmission that could be preempted by URLL retransmission. The notion of numerology/numerologies refers to waveform parametrization such as, for example, cyclic prefix and sub-carrier spacing in orthogonal frequency division multiplexing (OFDM) and where large SCS corresponds to short TTI/slot and small SCS corresponds to large TTI/slot.

Under the URLLC retransmission scheme, bandwidth requirement for the first transmission is small, and thus short TTI subband may be made small, thus reducing the overhead required for support of URLLC. In addition, as URLLC retransmissions are significantly less likely, impact on eMBB due to URLLC retransmission preemption is small.

*Illustrative Implementations*

FIG. 10 illustrates an example system 1000 having at least an example apparatus 1010 and an example apparatus 1020 in accordance with an implementation of the present disclosure. Each of apparatus 1010 and apparatus 1020 may perform various functions to implement schemes, techniques, processes and methods described herein pertaining to HARQ and ARQ design for URLLC in mobile communications, including the various schemes described above with respect to various proposed designs, concepts, schemes, systems and methods described above as well as processes 1100, 1200 and 1300 described below.

Each of apparatus 1010 and apparatus 1020 may be a part of an electronic apparatus, which may be a network apparatus or a user equipment (UE), such as a portable or mobile apparatus, a wearable apparatus, a wireless communication apparatus or a computing apparatus. For instance, each of apparatus 1010 and apparatus 1020 may be implemented in a smartphone, a smartwatch, a personal digital assistant, a digital camera, or a computing equipment such as a tablet computer, a laptop computer or a notebook computer. Each of apparatus 1010 and apparatus 1020 may also be a part of a machine type apparatus, which may be an IoT apparatus such as an immobile or a stationary apparatus, a home apparatus, a wire communication apparatus or a computing apparatus. For instance, each of apparatus 1010 and apparatus 1020 may be implemented in a smart thermostat, a smart fridge, a smart door lock, a wireless speaker or a home control center. When implemented in or as a network apparatus, apparatus 1010 and/or apparatus 1020 may be implemented in an eNodeB in a LTE, LTE-Advanced or LTE-Advanced Pro network or in a gNB or TRP in a 5G network, an NR network or an IoT network.

In some implementations, each of apparatus 1010 and apparatus 1020 may be implemented in the form of one or more integrated-circuit (IC) chips such as, for example and without limitation, one or more single-core processors, one or more multi-core processors, or one or more complex-instruction-set-computing (CISC) processors. In the various schemes described above, each of apparatus 1010 and apparatus 1020 may be implemented in or as a network apparatus or a UE. Each of apparatus 1010 and apparatus 1020 may include at least some of those components shown in FIG. 10 such as a processor 1012 and a processor 1022, respectively, for example. Each of apparatus 1010 and apparatus 1020

may further include one or more other components not pertinent to the proposed scheme of the present disclosure (e.g., internal power supply, display device and/or user interface device), and, thus, such component(s) of apparatus 1010 and apparatus 1020 are neither shown in FIG. 10 nor described below in the interest of simplicity and brevity.

In one aspect, each of processor 1012 and processor 1022 may be implemented in the form of one or more single-core processors, one or more multi-core processors, or one or more CISC processors. That is, even though a singular term "a processor" is used herein to refer to processor 1012 and processor 1022, each of processor 1012 and processor 1022 may include multiple processors in some implementations and a single processor in other implementations in accordance with the present disclosure. In another aspect, each of processor 1012 and processor 1022 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 1012 and processor 1022 is a special-purpose machine specifically designed, arranged and configured to perform specific tasks including those pertaining to HARQ and ARQ design for URLLC in mobile communicationsin accordance with various implementations of the present disclosure.

In some implementations, apparatus 1010 may also include a transceiver 1016 coupled to processor 1012. Transceiver 1016 may be capable of wirelessly transmitting and receiving data. In some implementations, apparatus 1020 may also include a transceiver 1026 coupled to processor 1022. Transceiver 1026 may include a transceiver capable of wirelessly transmitting and receiving data.

In some implementations, apparatus 1010 may further include a memory 1014coupled to processor 1012 and capable of being accessed by processor 1012 and storing data therein. In some implementations, apparatus 1020 may further include a memory 1024coupled to processor 1022 and capable of being accessed by processor 1022 and storing data therein. Each of memory 1014 and memory 1024 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 1014 and memory 1024 may include a type of read-only memory (ROM) such as mask ROM, programmable ROM (PROM), erasable programmable ROM (EPROM) and/or electrically erasable programmable ROM (EEPROM). Alternatively, or additionally, each of memory 1014 and memory 1024 may include a type of non-volatile random-access memory (NVRAM) such as flash memory, solid-state memory, ferroelectric RAM (FeRAM), magnetoresistive RAM (MRAM) and/or phase-change memory.

For illustrative purposes and without limitation, a description of capabilities of apparatus 1010, as a base station (e.g., eNB or gNB), and apparatus 1020, as a UE, is provided below.

In some implementations, processor 1012 of apparatus 1010 of a mobile network may perform, via transceiver 1016, a first transmission to apparatus 1020 of the mobile network in support of URLLC with a first amount of redundancy. Processor 1012 may also determine whether a predefined condition is met. In response to a determination that the predefined condition is met, processor 1012 may perform, via transceiver 1016, a second transmission to apparatus 1020 in support of the URLLC with a second amount of redundancy greater than the first amount of redundancy.

In some implementations, in performing the first transmission, processor 1012 may perform the first transmission with a first BLER target. Additionally, in performing the second transmission, processor 1012 may perform the second transmission with a second BLER target lower than the first BLER target.

In some implementations, in performing the first transmission, processor 1012 may perform the first transmission with the first amount of redundancy for HARQ. In such cases, the predefined condition may include either of the following: (1) receiving a NACK from apparatus 1020, or (2) not receiving any response from apparatus 1020 for a predefined amount of time after the performing of the first transmission.

In some implementations, after performing the first transmission, processor 1012 may receive, via transceiver 1016, from apparatus 1020 the NACK and a feedback indicating a required amount of redundancy for the second transmission.

In some implementations, in performing the first transmission, processor 1012 may perform the first transmission with the first amount of redundancy for ARQ. In such cases, the predefined condition may include not receiving any response from apparatus 1020 for a predefined amount of time after the performing of the first transmission.

In some implementations, an amount of repetition of data in the second transmission may be greater than an amount of repetition of the data in the first transmission.

In some implementations, processor 1012 may obtain a diversity degree with respect to a communication channel between apparatus 1010 and apparatus 1020. Moreover, based on the diversity degree, processor 1012 may adapt HARQ or ARQ in transmissions to apparatus 1020.

In some implementations, in obtaining the diversity degree, processor 1012 may perform either of the following: (1) receiving from apparatus 1020 information comprising a measurement of the diversity degree or an equivalent of the diversity degree; or (2) determining the diversity degree by inference based on a measurement by the processor on a reverse link of the communication channel between apparatus 1010 and apparatus 1020.

In some implementations, the feedback received by processor 1012 from apparatus 1020may be in the form of link adaptation reports, CQIs or any other form, and which was calculated for the first transmission based on the first BLER target and for the second transmission based on the second BLER target.

In some implementations, processor 1012 may establish, via transceiver 1016, a communication link with apparatus 1020. Moreover, processor 1012 may provide, via transceiver 1016, URLLC traffic in transmissions to apparatus 1020. In some implementations, processor 1012 may multiplex, via transceiver 1016, URLLC traffic and eMBB traffic in transmissions to apparatus 1020.

In some implementations, in multiplexing the URLLC traffic and the eMBB traffic, processor 1012 may multiplex the URLLC traffic and the eMBB traffic in a frequency domain. For instance, processor 1012 may perform first transmissions for URLLC in a first bandwidth part in the frequency domain. Additionally, processor 1012 may perform transmissions for eMBB in at least a second bandwidth part in the frequency domain. Furthermore, processor 1012 may perform retransmissions for URLLC in at least the second bandwidth part.

In some implementations, the first bandwidth part may be configured with TTIs with a first TTI length, and the second bandwidth part may be configured with TTIs with a second TTI length longer than the first TTI length.

In some implementations, in providing the URLLC traffic, processor 1012 may performHARQ firsttransmissions in the first bandwidth part with the first numerology. Additionally, processor 1012 may perform HARQ retransmissions in at least the second bandwidth part with the second numerology with a SCS smaller than the first numerology.

In some implementations, the first bandwidth part may be configured with a first numerology, and the second bandwidth part may be configured with a second numerology different from the first numerology. In some implementations, the first bandwidth part may be configured with a first subcarrier spacing, and the second bandwidth part may be configured with a second subcarrier spacing different from the first subcarrier spacing. In some implementations, the first bandwidth part may be configured with a first TTI length, and the second bandwidth part may be configured with a second TTI length different from the first TTI length. In some implementations, the first bandwidth part may be configured with a first slot length, and the second bandwidth part may be configured with a second slot length different from the first slot length.

In some implementations, processor 1012 may perform, via transceiver 1016, a first transmission to apparatus 1020 for URLLC on a first carrier component with a first BLER target. Moreover, processor 1012 may perform, via transceiver 1016, a retransmission to apparatus 1020 for the URLLC on a second carrier component with a second BLER target different from the first BLER target. Furthermore, processor 1012 may receive, via transceiver 1016, from apparatus 1020 a feedback indicating a required amount of redundancy for the first transmission on the first carrier component with the first BLER target and a required amount of redundancy for the retransmission on the second carrier component with a second BLER target.

In some implementations, a mechanism of the retransmission may be ARQ based.

In some implementations, processor 1022 of apparatus 1020may receive, via transceiver 1026, a first transmission from apparatus 1010 in support of URLLC with a first amount of redundancy. Additionally, processor 1022 may receive, via transceiver 1026, a second transmission from apparatus 1010 in support of the URLLC with a second amount of redundancy greater than the first amount of redundancy.

In some implementations, in receiving the first transmission, processor 1022 may receive the first transmission with the first amount of redundancy for HARQ. In such cases, in receiving the second transmission, processor 1022 may receive the transmission either (1) after transmitting a NACK to apparatus 1010 or (2) not transmitting any response to apparatus 1010 for a predefined amount of time after the receiving of the first transmission.

In some implementations, after receiving the first transmission, processor 1022 may transmit, via transceiver 1026, to apparatus 1010 the NACK and a feedback indicating a required amount of redundancy for the second transmission based on the second BLER target.

In some implementations, in receiving the first transmission, processor 1022 may receive the first transmission with the first amount of redundancy for ARQ. In such cases, in receiving the second transmission, processor 1022 may receive the second transmission as a result of not transmitting any response to apparatus 1010 for a predefined amount of time after the receiving of the first transmission.

In some implementations, an amount of repetition of data in the second transmission may be greater than an amount of repetition of the data in the first transmission.

In some implementations, processor 1022 may transmit, via transceiver 1026, to apparatus 1010 information comprising a measurement of a diversity degree with respect to a communication channel between apparatus 1010 and apparatus 1020 or an equivalent of the diversity degree.

In some implementations, processor 1022 may transmit, via transceiver 1026, to apparatus 1010 a feedback indicating a required amount of redundancy for the first transmission and a required amount of redundancy for the second transmission.

*Illustrative Processes*

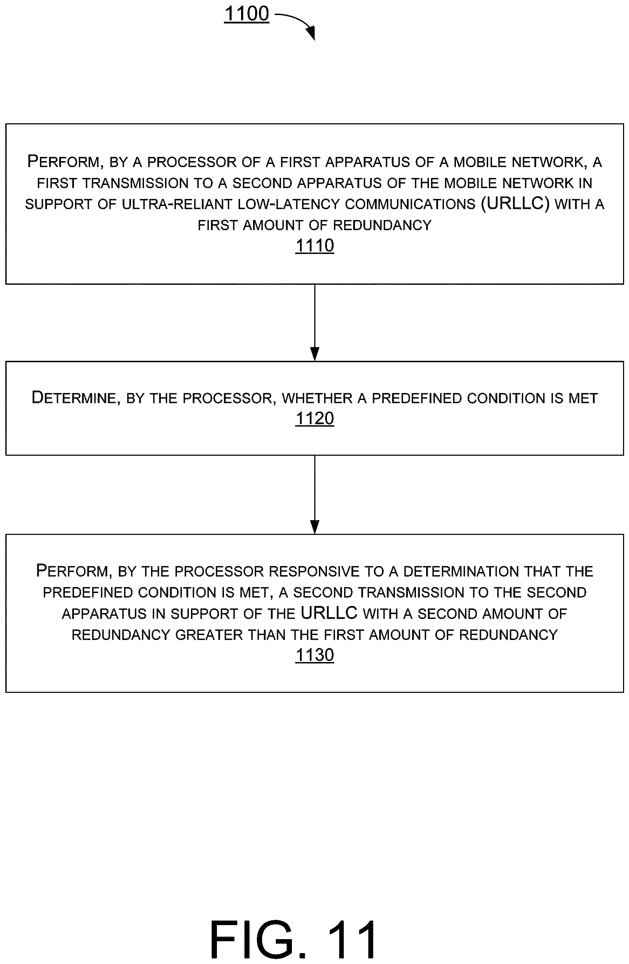

FIG. 11 illustrates an example process 1100 in accordance with an implementation of the present disclosure. Process 1100 may represent an aspect of implementing HARQ and ARQ design for URLLC in mobile communications, including the various schemes described above with respect to various proposed designs, concepts, schemes, systems and methods described above. More specifically, process 1100 may represent an aspect of the proposed concepts and schemes pertaining to HARQ and ARQ design for URLLC in mobile communications. For instance, process 1100 may be an example implementation, whether partially or completely, of the proposed schemes described above for HARQ and ARQ design for URLLC in mobile communications. Process 1100 may include one or more operations, actions, or functions as illustrated by one or more of blocks1110, 1120 and 1130. Although illustrated as discrete blocks, various blocks of process 1100 may be divided into additional blocks, combined into fewer blocks, or eliminated, depending on the desired implementation. Moreover, the blocks/sub-blocks of process 1100 may be executed in the order shown in FIG. 11 or, alternatively in a different order. The blocks/sub-blocks of process 1100 may be executed iteratively. Process 1100 may be implemented by or in apparatus 1010 and apparatus 1020 as well as any variations thereof. Solely for illustrative purposes and without limiting the scope, process 1100 is described below in the context of apparatus 1010 as a base station and apparatus 1020 as a UE in a mobile network. Process 1100 may begin at block 1110.

At 1110, process 1100 may involve processor 1012 of apparatus 1010 performing a first transmission to apparatus 1020 in support of URLLC with a first amount of redundancy. Process 1100 may proceed from 1110 to 1120.

At 1120, process 1100 may involve processor 1012 determining whether a predefined condition is met. Process 1100 may proceed from 1120 to 1130.

At 1130, process 1100 may involve processor 1012 performing, responsive to a determination that the predefined condition is met, a second transmission to apparatus 1020 in support of the URLLC with a second amount of redundancy greater than the first amount of redundancy.

In some implementations, in performing the first transmission, process 1100 may involve processor 1012 performing the first transmission with a first BLER target. Additionally, in performing the second transmission, process 1100 may involve processor 1012 performing the second transmission with a second BLER target lower than the first BLER target.

In some implementations, in performing the first transmission, process 1100 may involve processor 1012 performing the first transmission with the first amount of redundancy for HARQ. In such cases, the predefined condition may include either of the following: (1) receiving a NACK from apparatus 1020 or (2) not receiving any response from apparatus 1020 for a predefined amount of time after the performing of the first transmission.

In some implementations, after performing the first transmission, process 1100 may further involve processor 1012 receiving, via transceiver 1016, from apparatus 1020 the NACK and a feedback indicating a required amount of redundancy for the second transmission.

In some implementations, in performing the first transmission, process 1100 may involve processor 1012performing the first transmission with the first amount of redundancy for ARQ. In such cases, the predefined condition may include not receiving any response from apparatus 1020 for a predefined amount of time after the performing of the first transmission.

In some implementations, an amount of repetition of data in the second transmission may be greater than an amount of repetition of the data in the first transmission.

In some implementations, process 1100 may further involve processor 1012 obtaining a diversity degree with respect to a communication channel between apparatus 1010 and apparatus 1020. Additionally, process 1100 may involve processor 1012 adapting, based on the diversity degree, HARQ or ARQ in transmissions to apparatus 1020.

In some implementations, in obtaining the diversity degree, process 1100 may involve processor 1012 performing either of the following: (1) receiving from apparatus 1020 information comprising a measurement of the diversity degree or an equivalent of the diversity degree; or (2) determining the diversity degree by inference based on a measurement by processor 1012 on a reverse link of the communication channel between apparatus 1010 and apparatus 1020.

In some implementations, process 1100 may also involve processor 1012 receiving, via transceiver 1016, from apparatus 1020 a feedback indicating a required amount of redundancy for the first transmission with the first target BLER and a required amount of redundancy for the second transmission with the second target BLER.

In some implementations, the feedback may be in the form of link adaptation reports, or channel quality indicators (CQIs), calculated based on the first BLER target for the first transmission set to a value around 1% to 10% and the second BLER target for the second transmission (retransmission) which is set to be lower than the first BLER target.

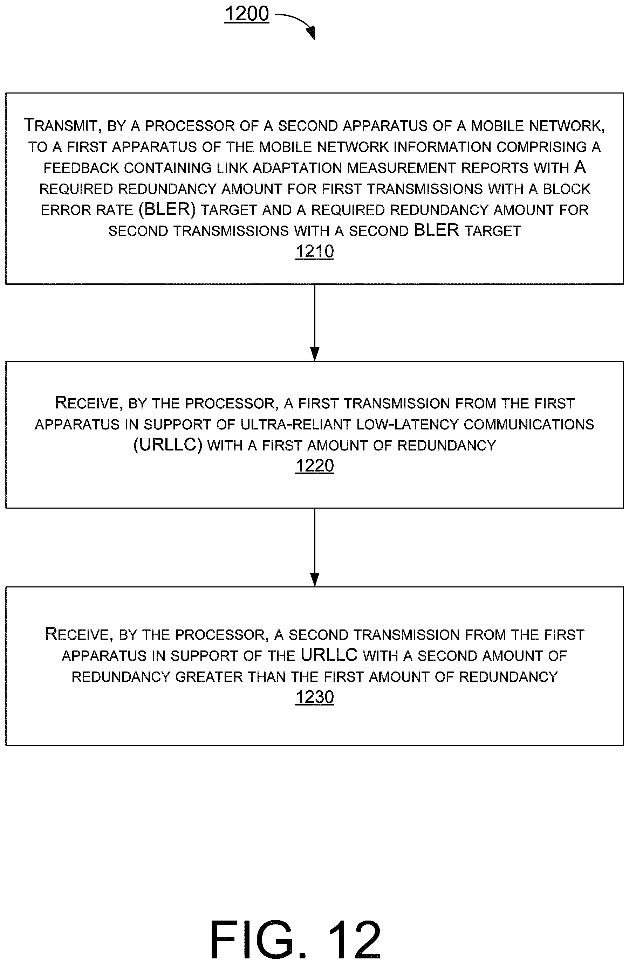

FIG. 12 illustrates an example process 1200 in accordance with an implementation of the present disclosure. Process 1200 may represent an aspect of implementing HARQ and ARQ design for URLLC in mobile communications, including the various schemes described above with respect to various proposed designs, concepts, schemes, systems and methods described above. More specifically, process 1200 may represent an aspect of the proposed concepts and schemes pertaining to HARQ and ARQ design for URLLC in mobile communications. For instance, process 1200 may be an example implementation, whether partially or completely, of the proposed schemes described above for HARQ and ARQ design for URLLC in mobile communications. Process 1200 may include one or more operations, actions, or functions as illustrated by one or more of blocks 1210, 1220 and 1230. Although illustrated as discrete blocks, various blocks of process 1200 may be divided into additional blocks, combined into fewer blocks, or eliminated, depending on the desired implementation. Moreover, the blocks/sub-blocks of process 1200 may be executed in the order shown in FIG. 12 or, alternatively in a different order. The blocks/sub-blocks of process 1200 may be executed iteratively. Process 1200 may be implemented by or in apparatus 1010 and apparatus 1020 as well as any variations thereof. Solely for illustrative purposes and without limiting the scope, process 1200 is described below in the context of apparatus 1010 as a base station and apparatus 1020 as a UE in a mobile network. Process 1200 may begin at block 1210.

At 1210, process 1200 may involve processor 1022 transmitting, via transceiver 1026, to apparatus 1010 information comprising a feedback containing a link adaption measurement report with a required redundancy amount for first transmissions with a first BLER target and a required redundancy amount for second transmissions with a second BLER target with respect to a communication channel between apparatus 1010 and apparatus 1020. Process 1200 may proceed from 1210 to 1220.

At 1220, process 1200 may involve processor 1022 receiving, via transceiver 1026, a first transmission from apparatus 1010 in support of URLLC with a first amount of redundancy. Process 1200 may proceed from 1220 to 1230.

At 1230, process 1200 may involve processor 1022 receiving, via transceiver 1026, a second transmission from apparatus 1010 in support of the URLLC with a second amount of redundancy greater than the first amount of redundancy.

In some implementations, in receiving the first transmission, process 1200 may involve processor 1022 receiving the first transmission with a first BLER target. Moreover, in receiving the second transmission, process 1200 may involve processor 1022 receiving the second transmission with a second BLER target lower than the first BLER target.

In some implementations, in receiving the first transmission, process 1200 may involve processor 1022 receiving the first transmission with the first amount of redundancy for HARQ. In such cases, in receiving the second transmission, process 1200 may involve processor 1022 receiving the transmission after transmitting, by processor 1022, a NACK to apparatus 1010 or as a result of not transmitting any response to apparatus 1010 for a predefined amount of time after the receiving of the first transmission. In some implementations, after receiving the first transmission, process 1200 may further involve processor 1022 transmitting, via transceiver 1026, to apparatus 1010 the NACK and a feedback indicating a required amount of redundancy for the second transmission.

In some implementations, in receiving the first transmission, process 1200 may involve processor 1022 receiving the first transmission with the first amount of redundancy for ARQ. In such cases, in receiving the second transmission, process 1200 may involve processor 1022 receiving the second transmission as a result of not transmitting any response to apparatus 1010 for a predefined amount of time after the receiving of the first transmission.

In some implementations, an amount of repetition of data in the second transmission may be greater than an amount of repetition of the data in the first transmission.

In some implementations, process 1200 may also involve processor 1022 transmitting, via transceiver 1026, to apparatus 1010 a feedback indicating a required amount of redundancy for the first transmission with first BLER target and a required amount of redundancy for the second transmission with the second BLER target.

In some implementations, the feedback may be in the form of link adaptation reports, or channel quality indicators (CQIs), calculated based on the first BLER target for the first transmission set to a value around 1% to 10% and the second BLER target for the second transmission (retransmission) which is set to be lower than the first BLER target.

In some implementations, process 1200 may involve processor 1022 transmitting, via transceiver 1026, to apparatus 1010 information comprising a measurement of a diversity degree with respect to a communication channel between apparatus 1010 and apparatus 1020 or an equivalent of the diversity degree.

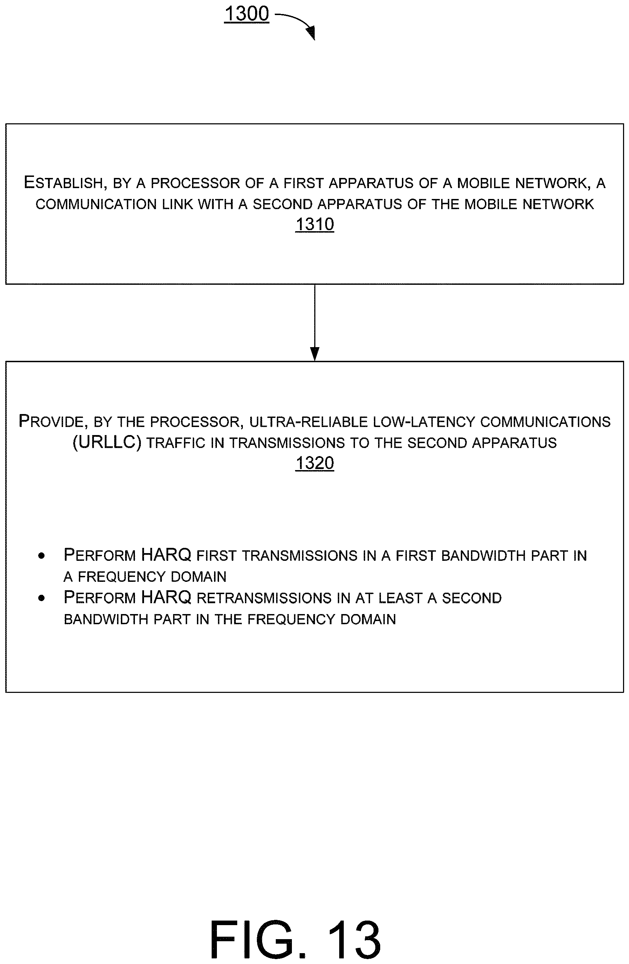

FIG. 13 illustrates an example process 1300 in accordance with an implementation of the present disclosure. Process 1300 may represent an aspect of implementing HARQ and ARQ design for URLLC in mobile communications, including the various schemes described above with respect to various proposed designs, concepts, schemes, systems and methods described above. More specifically, process 1300 may represent an aspect of the proposed concepts and schemes pertaining to HARQ and ARQ design for URLLC in mobile communications. For instance, process 1300 may be an example implementation, whether partially or completely, of the proposed schemes described above for HARQ and ARQ design for URLLC in mobile communications. Process 1300 may include one or more operations, actions, or functions as illustrated by one or more of blocks 1310 and 1320. Although illustrated as discrete blocks, various blocks of process 1300 may be divided into additional blocks, combined into fewer blocks, or eliminated, depending on the desired implementation. Moreover, the blocks/sub-blocks of process 1300 may be executed in the order shown in FIG. 13 or, alternatively in a different order. The blocks/sub-blocks of process 1300 may be executed iteratively. Process 1300 may be implemented by or in apparatus 1010 and apparatus 1020 as well as any variations thereof. Solely for illustrative purposes and without limiting the scope, process 1300 is described below in the context of apparatus 1010 as a base station and apparatus 1020 as a UE in a mobile network. Process 1300 may begin at block 1310.

At 1310, process 1300 may involve processor 1012 establishing a communication link with apparatus 1020. Process 1300 may proceed from 1310 to 1320.

At 1320, process 1300 may involve processor 1012 providing URLLC traffic in transmissions to apparatus 1020.

In some implementations, in multiplexing the URLLC traffic and the eMBB traffic, process 1300 may involve processor 1012 multiplexing the URLLC traffic and the eMBB traffic in a frequency domain by performing a number of operations. For instance, process 1300 may involve processor 1012 performing first HARQ transmissions for URLLC in a first bandwidth part in the frequency domain. Additionally, process 1300 may involve processor 1012 performing transmissions for eMBB in at least a second bandwidth part in the frequency domain. Moreover, process 1300 may involve processor 1012 performing HARQ retransmissions for URLLC in at least the second bandwidth part.

In some implementations, the first bandwidth part may be configured with a numerology with a first SCS and slot/TTI length, and the second bandwidth part may be configured with a second numerology with a smaller SCS and a longer slot/TTI than those of the first numerology.

In some implementations, in providing the URLLC traffic, process 1300 may involve processor 1012 performing HARQ first transmissions in the first bandwidth part with the first numerology. Additionally, process 1300 may involve processor 1012 performing HARQ retransmissions in at least the second bandwidth part with the second numerology with a SCS smaller than the first numerology.

In some implementations, the first bandwidth part may be configured with a first numerology, and the second bandwidth part may be configured with a second numerology different from the first numerology. In some implementations, the first bandwidth part may be configured with a first subcarrier spacing, and the second bandwidth part may be configured with a second subcarrier spacing different from the first subcarrier spacing. In some implementations, the first bandwidth part may be configured with a first TTI length, and the second bandwidth part may be configured with a second TTI length different from the first TTI length. In some implementations, the first bandwidth part may be configured with a first slot length, and the second bandwidth part may be configured with a second slot length different from the first slot length.

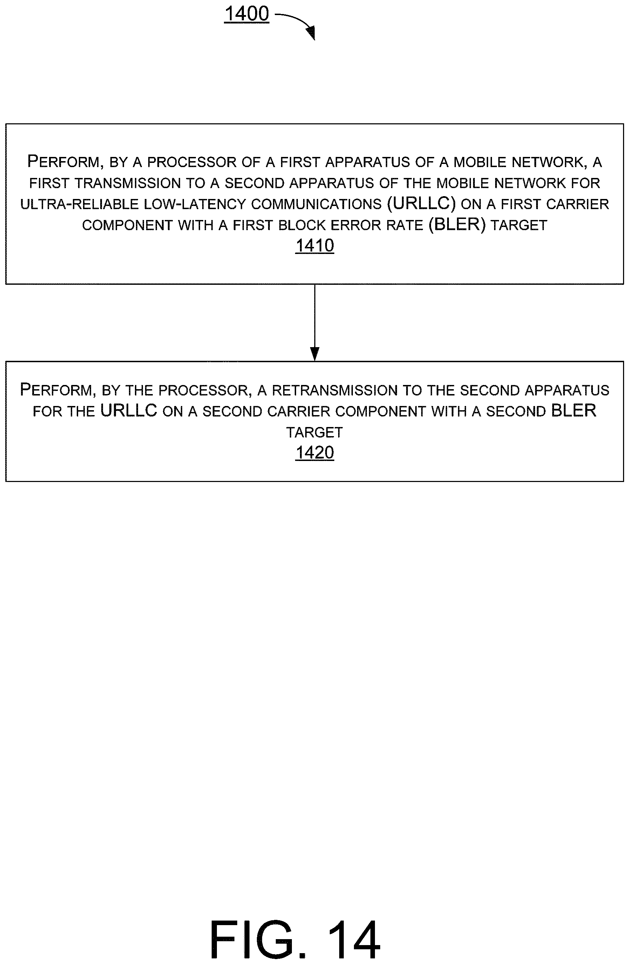

FIG. 14 illustrates an example process 1400 in accordance with an implementation of the present disclosure. Process 1400 may represent an aspect of implementing HARQ and ARQ design for URLLC in mobile communications, including the various schemes described above with respect to various proposed designs, concepts, schemes, systems and methods described above. More specifically, process 1400 may represent an aspect of the proposed concepts and schemes pertaining to HARQ and ARQ design for URLLC in mobile communications. For instance, process 1400 may be an example implementation, whether partially or completely, of the proposed schemes described above for HARQ and ARQ design for URLLC in mobile communications. Process 1400 may include one or more operations, actions, or functions as illustrated by one or more of blocks 1410 and 1420. Although illustrated as discrete blocks, various blocks of process 1400 may be divided into additional blocks, combined into fewer blocks, or eliminated, depending on the desired implementation. Moreover, the blocks/sub-blocks of process 1400 may be executed in the order shown in FIG. 14 or, alternatively in a different order. The blocks/sub-blocks of process 1400 may be executed iteratively. Process 1400 may be implemented by or in apparatus 1010 and apparatus 1020 as well as any variations thereof. Solely for illustrative purposes and without limiting the scope, process 1400 is described below in the context of apparatus 1010 as a base station and apparatus 1020 as a UE in a mobile network. Process 1400 may begin at block 1410.

At 1410, process 1400 may involve processor 1012 of apparatus 1010 performing, via transceiver 1016, a first transmission to apparatus 1020 for URLLC on a first carrier component with a first BLER target. Process 1400 may proceed from 1410 to 1420.

At 1420, process 1400 may involve processor 1012 performing, via transceiver 1016, a retransmission to apparatus 1020 for the URLLC on a second carrier component with a second BLER target different from the first BLER target.

In some implementations, a mechanism of the retransmission may be ARQ based.

In some implementations, process 1400 may also involve processor 1012 receiving, via transceiver 1016, from apparatus 1020 a feedback indicating a required amount of redundancy for the first transmission on the first carrier component with the first BLER target and a required amount of redundancy for the retransmission on the second carrier component with a second BLER target.

*Additional Notes*

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components.

Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope and spirit of the present disclosure. Accordingly, the various implementations disclosed herein are not intended to be limiting, with the true scope and spirit being indicated by the following claims.

The present invention can also be described by means of the following clauses:

1. A method, comprising:

performing, by a processor of a first apparatus of a mobile network, a first transmission to a second apparatus of the mobile network in support of ultra-reliable low-latency communications (URLLC) with a first amount of redundancy;
determining, by the processor, whether a predefined condition is met; and
performing, by the processor responsive to a determination that the predefined condition is met, a second transmission to the second apparatus in support of the URLLC with a second amount of redundancy greater than the first amount of redundancy.

2. The method of Clause 1, wherein the performing of the first transmission comprises performing the first transmission with a first block error rate (BLER) target, and wherein the performing of the second transmission comprises performing the second transmission with a second BLER target lower than the first BLER target.

3. The method of Clause 1, wherein the performing of the first transmission comprises performing the first transmission with the first amount of redundancy for hybrid automatic repeat request (HARQ), and wherein the predefined condition comprises either receiving a non-acknowledgement (NACK) from the second apparatus or not receiving any response from the second apparatus for a predefined amount of time after the performing of the first transmission.

4. The method of Clause 3, further comprising:
receiving, by the processor after performing the first transmission, from the second apparatus the NACK and a feedback indicating a required amount of redundancy for the second transmission.

5. The method of Clause 1, wherein the performing of the first transmission comprises performing the first transmission with the first amount of redundancy for automatic repeat request (ARQ), and wherein the predefined condition comprises not receiving any response from the second apparatus for a predefined amount of time after the performing of the first transmission.

6. The method of Clause 1, wherein an amount of repetition of data in the second transmission is greater than an amount of repetition of the data in the first transmission.

7. The method of Clause 1, further comprising:

   obtaining, by the processor, a diversity degree with respect to a communication channel between the first apparatus and the second apparatus; and
   adapting, by the processor based on the diversity degree, hybrid automatic repeat request (HARQ) or automatic repeat request (ARQ) in transmissions to the second apparatus.

8. The method of Clause 7, wherein the obtaining of the diversity degree comprises either of:

   receiving from the second apparatus information comprising a measurement of the diversity degree or an equivalent of the diversity degree; and
   determining the diversity degree by inference based on a measurement by the processor on a link of the communication channel between the first apparatus and the second apparatus.

9. The method of Clause 1, further comprising:
receiving, by the processor, from the second apparatus a feedback indicating a required amount of redundancy for the first transmission and a required amount of redundancy for the second transmission.

10. The method of Clause 9, wherein the feedback is in a form of link adaptation reports, or channel quality indicators (CQIs) calculated based on a first block error rate (BLER) target for the first transmission set to a value around 1% to 10% and a second BLER target for the second transmission which is set to be lower than the first BLER target.

11. A method, comprising:

   receiving, by a processor of a second apparatus of a mobile network, a first transmission from a first apparatus of the mobile network in support of ultra-reliable low-latency communications (URLLC) with a first amount of redundancy; and
   receiving, by the processor, a second transmission from the first apparatus in support of the URLLC with a second amount of redundancy greater than the first amount of redundancy.

12. The method of Clause 11, wherein the receiving of the first transmission comprises receiving the first transmission with the first amount of redundancy for hybrid automatic repeat request (HARQ), and wherein the receiving of the second transmission comprises receiving the transmission after transmitting, by the processor, a non-acknowledgement (NACK) to the first apparatus or as a result of not transmitting any response to the first apparatus for a predefined amount of time after the receiving of the first transmission.

13. The method of Clause 12, further comprising:
transmitting, by the processor after receiving the first transmission, to the first apparatus the NACK and a feedback indicating a required amount of redundancy for the second transmission.

14. The method of Clause 11, wherein the receiving of the first transmission comprises receiving the first transmission with the first amount of redundancy for automatic repeat request (ARQ), and wherein the receiving of the second transmission comprises receiving the second transmission as a result of not transmitting any response to the first apparatus for a predefined amount of time after the receiving of the first transmission.

15. The method of Clause 11, wherein an amount of repetition of data in the second transmission is greater than an amount of repetition of the data in the first transmission.

16. The method of Clause 11, further comprising:
transmitting, by the processor, to the first apparatus information comprising a measurement of a diversity degree with respect to a communication channel between the first apparatus and the second apparatus or an equivalent of the diversity degree.

17. The method of Clause 11, further comprising:
transmitting, by the processor, to the first apparatus a feedback indicating a required amount of redundancy for the first transmission and a required amount of redundancy for the second transmission.

18. The method of Clause 17, wherein the feedback is in a form of link adaptation reports, or channel quality indicators (CQIs) calculated based on a first block error rate (BLER) target for the first transmission set to a value around 1% to 10% and a second BLER target for the second transmission which is set to be lower than the first BLER target.

19. A method, comprising:

establishing, by a processor of a first apparatus of a mobile network, a communication link with a second apparatus of the mobile network; and
providing, by the processor, ultra-reliable low-latency communications (URLLC) traffic in transmissions to the second apparatus by:

performing hybrid automatic repeat request (HARQ) first transmissions to the second apparatus in a first bandwidth part in a frequency domain; and
performing a HARQ retransmissions in at least a second bandwidth part in the frequency domain.

20. The method of Clause 19, wherein the first bandwidth part is configured with a first numerology, and wherein the second bandwidth part is configured with a second numerology different from the first numerology.

21. The method of Clause 19, wherein the first bandwidth part is configured with a first subcarrier spacing, and wherein the second bandwidth part is configured with a second subcarrier spacing different from the first subcarrier spacing.

22. The method of Clause 19, wherein the first bandwidth part is configured with a first transmission time interval (TTI) length, and wherein the second bandwidth part is configured with a second TTI length different from the first TTI length.

23. The method of Clause 19, wherein the first bandwidth part is configured with a first slot length, and wherein the second bandwidth part is configured with a second slot length different from the first slot length.

24. A method, comprising:

performing, by a processor of a first apparatus of a mobile network, a first transmission to a second apparatus of the mobile network for ultra-reliable low-latency communications (URLLC) on a first carrier component with a first block error rate (BLER) target; and
performing, by the processor, a retransmission to the second apparatus for the URLLC on a second carrier component with a second BLER target.

25. The method of Clause 24, wherea mechanism of the retransmission is automatic repeat request (ARQ) based.

26. The method of Clause 24, further comprising:

receiving, by the processor, from the second apparatus a feedback indicating a required amount of redundancy for the first transmission on the first carrier component with the first BLER target and a required amount of redundancy for the retransmission on the second carrier component with a second BLER target.

**Claims**

1. A method, comprising:

establishing, by a processor of a first apparatus of a mobile network, a communication link with a second apparatus of the mobile network; and
providing, by the processor, ultra-reliable low-latency communications (URLLC) traffic in transmissions to the second apparatus by:

performing hybrid automatic repeat request (HARQ) first transmissions to the second apparatus in a first bandwidth part in a frequency domain; and
performing a HARQ retransmissions in at least a second bandwidth part in the frequency domain.

2. The method of Claim 1, wherein the first bandwidth part is configured with a first numerology, and wherein the second bandwidth part is configured with a second numerology different from the first numerology.

3. The method of Claim 1, wherein the first bandwidth part is configured with a first subcarrier spacing, and wherein the second bandwidth part is configured with a second subcarrier spacing different from the first subcarrier spacing.

**4.** The method of Claim 1, wherein the first bandwidth part is configured with a first transmission time interval (TTI) length, and wherein the second bandwidth part is configured with a second TTI length different from the first TTI length; and/or
wherein the first bandwidth part is configured with a first slot length, and wherein the second bandwidth part is configured with a second slot length different from the first slot length.

**5.** A method, comprising:

performing, by a processor of a first apparatus of a mobile network, a first transmission to a second apparatus of the mobile network for ultra-reliable low-latency communications (URLLC) on a first carrier component with a first block error rate (BLER) target; and
performing, by the processor, a retransmission to the second apparatus for the URLLC on a second carrier component with a second BLER target.

**6.** The method of Claim 5, where a mechanism of the retransmission is automatic repeat request (ARQ) based.

**7.** The method of Claim 5, further comprising:
receiving, by the processor, from the second apparatus a feedback indicating a required amount of redundancy for the first transmission on the first carrier component with the first BLER target and a required amount of redundancy for the retransmission on the second carrier component with a second BLER target.

**8.** A first apparatus of a mobile network, comprising:

a processor; and
a transceiver (1016) coupled to processor (1012);
wherein the processor is adapted to

establish, via transceiver (1016), a communication link with a second apparatus of the mobile network; and
provide, via transceiver (1016), ultra-reliable low-latency communications (URLLC) traffic in transmissions to the second apparatus by:

performing hybrid automatic repeat request (HARQ) first transmissions to the second apparatus in a first bandwidth part in a frequency domain; and
performing a HARQ retransmissions in at least a second bandwidth part in the frequency domain.

**9.** The apparatus of Claim 8, wherein the first bandwidth part is configured with a first numerology, and wherein the second bandwidth part is configured with a second numerology different from the first numerology.

**10.** The apparatus of Claim 8, wherein the first bandwidth part is configured with a first subcarrier spacing, and wherein the second bandwidth part is configured with a second subcarrier spacing different from the first subcarrier spacing.

**11.** The apparatus of Claim 8, wherein the first bandwidth part is configured with a first transmission time interval (TTI) length, and wherein the second bandwidth part is configured with a second TTI length different from the first TTI length; and/or
wherein the first bandwidth part is configured with a first slot length, and wherein the second bandwidth part is configured with a second slot length different from the first slot length.

**12.** A first apparatus of a mobile network, comprising:

a processor; and
a transceiver (1016) coupled to processor (1012);
wherein the processor is adapted to

perform a first transmission to a second apparatus of the mobile network for ultra-reliable low-latency communications (URLLC) on a first carrier component with a first block error rate (BLER) target; and
perform a retransmission to the second apparatus for the URLLC on a second carrier component with a second BLER target.

13. The apparatus of Claim 12, where a mechanism of the retransmission is automatic repeat request (ARQ) based.

14. The apparatus of Claim 12, wherein the processor is further adapted to
   receive from the second apparatus a feedback indicating a required amount of redundancy for the first transmission on the first carrier component with the first BLER target and a required amount of redundancy for the retransmission on the second carrier component with a second BLER target.

100 ⟍

(A)

| 1-STEP HARQ SUCCESS | 1-STEP HARQ FAILURE |

$1^{ST}$ Tx

$1^{ST}$ Tx

ACK

NACK?

(B)

| 2-STEP HARQ SUCCESS | 2-STEP HARQ FAILURE |

$1^{ST}$ Tx

ACK

$1^{ST}$ Tx

NACK?

$2^{ND}$ Tx

ACK

$1^{ST}$ Tx

NACK?

$2^{ND}$ Tx

NACK?

# FIG. 1

200 ⟍

ASYMMETRIC HARQ
(2 STEPS)

FREQUENCY

N2 REPEATS

AGGREGATE REPEATS AT $2^{ND}$ TRANSMISSION DECODING N = N1 + N2

N1 REPEAT

HARQ BUFFER DATA

$1^{ST}$ Tx          $2^{ND}$ Tx          TIME

LEGACY HARQ
(2 STEPS)

FREQUENCY

N2 = N1 REPEATS

AGGREGATE REPEATS AT $2^{ND}$ TRANSMISSION DECODING N = N1 + N2

N1 REPEATS

HARQ BUFFER DATA

$1^{ST}$ Tx          $2^{ND}$ Tx          TIME

# FIG. 2

300 ⟍

(A)

1-STEP ARQ
SUCCESS

1-STEP ARQ
FAILURE

1ST TX

1ST TX

ACK

(B)

2-STEP ARQ
SUCCESS

2-STEP ARQ
FAILURE

1ST TX

1ST TX

1ST TX

ACK

2ND TX

2ND TX

ACK

# FIG. 3

400 ⟍

ASYMMETRIC HARQ
(2 STEPS)

FREQUENCY

N2 REPEATS

AGGREGATE
REPEATS AT 2ND
TRANSMISSION
DECODING
N = N1 + N2

N1 REPEAT

HARQ BUFFER DATA

1ST TX

2ND TX

TIME

ASYMMETRIC ARQ
(2 STEPS)

FREQUENCY

N2 REPEATS

NUMBER OF
REPEATS USED FOR
2ND TRANSMISSION
DECODING
N = N2

N1 REPEAT

1ST TX

2ND TX

TIME

# FIG. 4

500 —

Design of repetition ratio of the 1st (H)ARQ Tx, BLER Target = 5e-06

Asymmetric
ARQ

Asymmetric
HARQ

— Asymmetric ARQ
— Asymmetric HARQ

Optimal Resource Allocation Ratio N1/N

Diversity Degree

550 —

Resource Saving using 2 step HARQ, BLER Target = 5e-06

— Asymmetric ARQ
— Asymmetric HARQ
— Legacy HARQ

Asymmetric
HARQ

Asymmetric
ARQ

Legacy
HARQ

Optimal Resource Saving w.r.t. 1 step HARQ(%)

Diversity Degree

## FIG. 5

600 —

Design of the 1$^{st}$ (H)ARQ Tx, BLER Target = 5e-06

— Asymmetric ARQ
— Asymmetric HARQ

Asymmetric
HARQ

Asymmetric
ARQ

Optimal 1$^{st}$ Transmission BLER Target

Diversity Degree

## FIG. 6

700 ⟍

750 ⟍

## FIG. 7

800 ⟍

850 ⟍

## FIG. 8

900 —

LEGEND:

= eMBB TRANSMISSION

= URLLC 1ST TRANSMISSION

= URLLC RETRANSMISSION

# FIG. 9

1000 —

# FIG. 10

1100 —

PERFORM, BY A PROCESSOR OF A FIRST APPARATUS OF A MOBILE NETWORK, A FIRST TRANSMISSION TO A SECOND APPARATUS OF THE MOBILE NETWORK IN SUPPORT OF ULTRA-RELIANT LOW-LATENCY COMMUNICATIONS (URLLC) WITH A FIRST AMOUNT OF REDUNDANCY
1110

DETERMINE, BY THE PROCESSOR, WHETHER A PREDEFINED CONDITION IS MET
1120

PERFORM, BY THE PROCESSOR RESPONSIVE TO A DETERMINATION THAT THE PREDEFINED CONDITION IS MET, A SECOND TRANSMISSION TO THE SECOND APPARATUS IN SUPPORT OF THE URLLC WITH A SECOND AMOUNT OF REDUNDANCY GREATER THAN THE FIRST AMOUNT OF REDUNDANCY
1130

# FIG. 11

1200

TRANSMIT, BY A PROCESSOR OF A SECOND APPARATUS OF A MOBILE NETWORK, TO A FIRST APPARATUS OF THE MOBILE NETWORK INFORMATION COMPRISING A FEEDBACK CONTAINING LINK ADAPTATION MEASUREMENT REPORTS WITH A REQUIRED REDUNDANCY AMOUNT FOR FIRST TRANSMISSIONS WITH A BLOCK ERROR RATE (BLER) TARGET AND A REQUIRED REDUNDANCY AMOUNT FOR SECOND TRANSMISSIONS WITH A SECOND BLER TARGET
1210

RECEIVE, BY THE PROCESSOR, A FIRST TRANSMISSION FROM THE FIRST APPARATUS IN SUPPORT OF ULTRA-RELIANT LOW-LATENCY COMMUNICATIONS (URLLC) WITH A FIRST AMOUNT OF REDUNDANCY
1220

RECEIVE, BY THE PROCESSOR, A SECOND TRANSMISSION FROM THE FIRST APPARATUS IN SUPPORT OF THE URLLC WITH A SECOND AMOUNT OF REDUNDANCY GREATER THAN THE FIRST AMOUNT OF REDUNDANCY
1230

# FIG. 12

1300

ESTABLISH, BY A PROCESSOR OF A FIRST APPARATUS OF A MOBILE NETWORK, A
COMMUNICATION LINK WITH A SECOND APPARATUS OF THE MOBILE NETWORK
1310

PROVIDE, BY THE PROCESSOR, ULTRA-RELIABLE LOW-LATENCY COMMUNICATIONS
(URLLC) TRAFFIC IN TRANSMISSIONS TO THE SECOND APPARATUS
1320

- PERFORM HARQ FIRST TRANSMISSIONS IN A FIRST BANDWIDTH PART IN
A FREQUENCY DOMAIN
- PERFORM HARQ RETRANSMISSIONS IN AT LEAST A SECOND
BANDWIDTH PART IN THE FREQUENCY DOMAIN

# FIG. 13

1400

PERFORM, BY A PROCESSOR OF A FIRST APPARATUS OF A MOBILE NETWORK, A
FIRST TRANSMISSION TO A SECOND APPARATUS OF THE MOBILE NETWORK FOR
ULTRA-RELIABLE LOW-LATENCY COMMUNICATIONS (URLLC) ON A FIRST CARRIER
COMPONENT WITH A FIRST BLOCK ERROR RATE (BLER) TARGET
1410

PERFORM, BY THE PROCESSOR, A RETRANSMISSION TO THE SECOND APPARATUS
FOR THE URLLC ON A SECOND CARRIER COMPONENT WITH A SECOND BLER
TARGET
1420

# FIG. 14

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CMCC: "NR MAC for URLLC", 3GPP DRAFT; R2-1701920 NR MAC FOR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20170213 - 20170217 12 February 2017 (2017-02-12), XP051212458, Retrieved from the Internet: URL:http://www.3gpp.org/ftp/Meetings_3GPP_SYNC/RAN2/Docs/ [retrieved on 2017-02-12] * paragraph [02.1] - paragraph [02.2] * ----- | 1-14 | INV. H04L1/18 H04L1/08 H04L1/20 |
| X | ERICSSON: "Moving of DL HARQ processes between carriers in LAA", 3GPP DRAFT; R2-151501 - MOVING OF DL HARQ PROCESSES BETWEEN CARRIERS IN LAA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. RAN WG2, no. Bratislava, Slovakia; 20150420 - 20150424 19 April 2015 (2015-04-19), XP050936424, Retrieved from the Internet: URL:http://www.3gpp.org/ftp/Meetings_3GPP_SYNC/RAN2/Docs/ [retrieved on 2015-04-19] * page 1 * ----- -/-- | 1-14 | **TECHNICAL FIELDS SEARCHED (IPC)** H04L |

The present search report has been drawn up for all claims

| Place of search | Date of completion of the search | Examiner |
|---|---|---|
| The Hague | 21 April 2021 | Kazaniecki, Daniel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUAWEI ET AL: "MAC Support of Multiple Numerologies", 3GPP DRAFT; R2-1700083, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, Wa; 20170117 - 20170119 17 January 2017 (2017-01-17), XP051210670, Retrieved from the Internet: URL:http://www.3gpp.org/ftp/Meetings_3GPP_SYNC/RAN2/Docs/ [retrieved on 2017-01-17] * page 4 *<br>----- | 1-14 | |
| X | INTEL CORPORATION: "Design aspects affecting reliability of URLLC services", 3GPP DRAFT; R1-1702243 INTEL - URLLC_RELIABILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 12 February 2017 (2017-02-12), XP051209401, Retrieved from the Internet: URL:http://www.3gpp.org/ftp/Meetings_3GPP_SYNC/RAN1/Docs/ [retrieved on 2017-02-12] * page 4 *<br>-----<br>-/-- | 1-14 | TECHNICAL FIELDS SEARCHED (IPC) |

The present search report has been drawn up for all claims

| Place of search | Date of completion of the search | Examiner |
|---|---|---|
| The Hague | 21 April 2021 | Kazaniecki, Daniel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 21 15 6340

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAMSUNG: "Efficiency of Packet Duplication for NR", 3GPP DRAFT; R2-1700611 EFFICIENCY OF PACKET DUPLICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170117 - 20170119 17 January 2017 (2017-01-17), XP051211183, Retrieved from the Internet: URL:http://www.3gpp.org/ftp/Meetings_3GPP_SYNC/RAN2/Docs/ [retrieved on 2017-01-17] * paragraph [2.3.2] * ----- | 1-14 | |
| X | INTEL CORPORATION: "Discussion on soft buffer management for eCA", 3GPP DRAFT; R1-156509, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151115 - 20151122 15 November 2015 (2015-11-15), XP051002949, Retrieved from the Internet: URL:http://www.3gpp.org/ftp/Meetings_3GPP_SYNC/RAN1/Docs/ [retrieved on 2015-11-15] * page 2 * ----- | 1-14 | TECHNICAL FIELDS SEARCHED (IPC) |

The present search report has been drawn up for all claims

| Place of search | Date of completion of the search | Examiner |
|---|---|---|
| The Hague | 21 April 2021 | Kazaniecki, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 840 268 A1**

REFERENCES CITED IN THE DESCRIPTION

**Patent documents cited in the description**

- US 62476933